(19) Europäisches Patentamt

European Patent Office

Office européen des brevets

(11) **EP 1 582 567 B2**

## (12) NEW EUROPEAN PATENT SPECIFICATION
After opposition procedure

(45) Date of publication and mention
of the opposition decision:
**16.11.2011 Bulletin 2011/46**

(45) Mention of the grant of the patent:
**09.05.2007 Bulletin 2007/19**

(21) Application number: **05251912.1**

(22) Date of filing: **29.03.2005**

(51) Int Cl.:
*C09D 5/00* (2006.01)    *C09D 7/00* (2006.01)
*C09D 17/00* (2006.01)    *C09D 133/00* (2006.01)
*C09D 143/00* (2006.01)

---

(54) **Aqueous coating composition**

Wässerige Beschichtungszusammensetzung

Composition de revetement aqueuse

---

(84) Designated Contracting States:
**DE FR GB IT**

(30) Priority: **01.04.2004 EP 04290873**

(43) Date of publication of application:
**05.10.2005 Bulletin 2005/40**

(73) Proprietor: **ROHM AND HAAS COMPANY**
**Philadelphia,**
**Pennsylvania 19106-2399 (US)**

(72) Inventors:
• **Gebhard, Matthew Stewart**
**New Britain**
**Pennsylvania 18901 (US)**
• **Edwards, Steven Scott**
**Horsham**
**Pennsylvania 19044 (US)**
• **Garzon, Alain**
**06130 Grasse (FR)**

(74) Representative: **Buckley, Guy Julian**
**Patent Outsourcing Limited**
**1 King Street**
**Bakewell**
**Derbyshire DE45 1DZ (GB)**

(56) References cited:
EP-A- 0 601 400     EP-A1- 1 149 875
EP-A2- 1 209 191     EP-A2- 1 300 448
WO-A-00/47633     WO-A-93/11181
WO-A-93/12183     WO-A-93/12184
WO-A2-01/74909     DE-A- 10 236 395
US-A- 5 055 511     US-B1- 6 492 451

• HUI SHIRLEY YANG, JON KIPLINGER, HERVÉ ADAM, MARC BALASTRE, ARNAUX CADIX, CÉCILE BONNET-GONET: 'Phosphate monomers as adhesion promoters: measuring the adhesion improvement with different test methods' PROCEEDINGS OF THE ANNUAL MEETING OF THE ADHESION SOCIETY no. 26, 2003,
• SHIRLEY YANG, JON KIPLINGER, HERVÉ ADAM: 'Phosphate monomers to improve adhesion in different applications and substrates' PROCEEDINGS OF THE EUROPEAN COATINGS CONFERENCE "ADHESION AND PERFORMANCE ENHANCEMENT" 07 April 2002 - 08 April 2002, NUERNBERG, GERMANY,

Remarks:
The file contains technical information submitted after the application was filed and not included in this specification

**Description**

This invention relates to an aqueous high PVC coating composition and a dry coating formed therefrom having a beneficial level of scrub resistance. More particularly this invention relates to an aqueous coating composition having a pigment volume concentration ("PVC") of from 75 to 90, and an aqueous emulsion copolymer, the copolymer having an average particle diameter of from 50 to 350 nanometers and a glass transition temperature ("Tg") of from -15°C to 20°C, the copolymer including as polymerized units at least one ethylenically unsaturated nonionic monomer and from 0.1 to 10 %, by weight based on the dry weight of the copolymer, ethylenically unsaturated phosphate monomer selected from phosphoalkyl(meth)acrylates, phosphoalkyl crotonates, phosphoalkyl maleates, phosphoalkyl fumarates, phosphodialkyl(meth)acrylates, phosphodialkyl crotonates, vinyl phosphates, and (meth)allyl phosphate, or salts thereof.

The present invention serves to provide an aqueous composition suitable for use, when dry, as a coating. By some measures aqueous coatings having a PVC of from 60 to 95 may, when dry, exhibit less physical integrity than corresponding lower PVC coatings; a measure of such integrity is considered to be provided by the scrub resistance of the coating.

U.S. Patent No. 6,492,451 discloses a relatively high PVC pigmented coating composition including an aqueous dispersion of at least one water-insoluble polymer which has phosphonate groups, as a binder. However, higher levels of scrub resistance are still sought

DE 102 36 395 discloses a rust inhibiting coating composition having a solids content of from 20 to 74% by weight.

WO 00/47633 discloses a process for emulsion polymerization of ethylenically unsaturated monomers of various monomers in the presence of water soluble phosphorylated cellulose.

EP 0 601 400 discloses a copolymer dispersant composition for inorganic pigments in the range 10 to 45% pigment by weight.

WO 93/12183 discloses an aqueous dispersion of composite particles including polymeric latex.

WO 93/12184 discloses a process for forming a suspension of discrete composite particles, such as TiO2 particles.

WO 93 11181 discloses a process for preparing an aqueous dispersion including polymeric latex and titanium dioxide pigment.

US 5,055,511 discloses permanently flexible and non tacky coating mastic and caulking compositions comprising 60 to 90% by weight non-volatile matter concentration.

The problem faced by the inventors is the provision of an aqueous coating composition having a PVC of from 75 to 90 suitable for use as a coating having a beneficial level of scrub resistance. Unexpectedly, the inventors found that the aqueous coating composition of this invention containing a selected amount of copolymerized phosphate acid monomer, or the salts thereof, was effective in providing wet scrub resistance in such coatings..

In a first aspect of the present invention there is provided an aqueous coating composition comprising at least one pigment, said coating composition having a pigment volume concentration (PVC) of from 75 to 90, and an aqueous emulsion copolymer, said copolymer having an average particle diameter of from 50 to 350 nanometers and a glass transition temperature (Tg) of from -15 °C to 20°C, and said copolymer comprising as polymerized units at least one ethylenically unsaturated nonionic monomer and from 0.1 to 10 %, by weight based on the dry weight of said copolymer, ethylenically unsaturated phosphate monomer, selected from phosphoalkyl(meth)acrylates, phosphoalkyl crotonates, phosphoalkyl maleates, phosphoalkyl fumarates, phosphodialkyl(meth)acrylates, phosphodialkyl crotonates, vinyl phosphates, and (meth)allyl phosphate, or salts thereof.

In a second aspect of the present invention there is provided a method for providing a coated substrate comprising

> (a) forming an aqueous coating composition comprising at least one pigment, said coating composition having a pigment volume concentration (PVC) of from 75 to 90, and an aqueous emulsion copolymer, said copolymer having an average particle diameter of from 50 to 350 nanometers and a Tg of from -15 °C to 20 °C, and said copolymer comprising as polymerized units at least one ethylenically unsaturated nonionic monomer and from 0.1 to 10 %, by weight based on the dry weight of said copolymer, ethylenically unsaturated phosphate monomer, selected from phosphoalkyl(meth)acrylates, phosphoalkyl crotonates, phosphoalkyl maleates, phosphoalkyl fumarates, phosphodialkyl(meth)acrylates, phosphodialkyl crotonates, vinyl phosphates, and (meth)allyl phosphate, or salts thereof;
> (b) applying said aqueous composition to a substrate; and
> (c) drying, or allowing to dry, said aqueous composition.

In a third aspect of the present invention there is provided a coated substrate prepared by the method of the second aspect of this invention.

This invention relates to an aqueous coating composition including at least one pigment. The aqueous coating composition may optionally contain extender(s). The aqueous coating composition has a PVC of from 75 to 90. The PVC is calculated by the following formula:

$$\text{PVC (\%)} = \underline{\frac{\text{volume of pigment(s) + volume extender(s)}}{\text{total dry volume of paint}}} \times 100.$$

By "pigment" herein is meant a particulate inorganic material which is capable of materially contributing to the opacity or hiding capability of a coating. Such materials typically have a refractive index of greater than 1.8 and include, for example, titanium dioxide, zinc oxide, zinc sulfide, and the like. Preferred is titanium dioxide. By "extender" herein is meant a particulate inorganic material having a refractive index of less than or equal to 1.8 and greater than 1.3 and includes, for example, calcium carbonate, clay, calcium sulfate, aluminosilicates, silicates, zeolites, and diatomaceous earth. The aqueous costing composition may optionally contain solid or voided polymer particles having a Tg of greater than 30 °C, said polymer particles not including, as polymerized units, phosphate monomer; such polymer particles are classified as extenders for purposes of PVC calculations herein.

The aqueous coating composition includes an aqueous emulsion copolymer, the copolymer having a glass transition temperature ("Tg") from -15 °C to 20 °C, and the copolymer including as copolymerized units at least one ethylenically unsaturated nonionic monomer and from 0.1 to 10 %, preferably from 0.2 to 5%, by weight based on the dry weight of the polymer, of the ethylenically unsaturated phosphate monomer, or salts thereof.

The aqueous emulsion copolymer includes at least one copolymerized ethylenically unsaturated nonionic monomer. By "nonionic monomer" herein is meant that the copolymerized monomer residue does not bear an ionic charge between pH=1-14. The ethylenically unsaturated nonionic monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, hydroxyethyl methacrylate, hydroxypropyl methacrylate; (meth)acrylonitrile; (meth)acrylamide; amino-functional and ureido-functional monomers; monomers bearing acetoacetate-functional groups; styrene and substituted styrenes; butadiene; ethylene, propylene, $\alpha$-olefins such as 1-decene; vinyl acetate, vinyl butyrate and other vinyl esters; and vinyl monomers such as vinyl chloride, vinylidene chloride.

The emulsion copolymer includes from 0.1 to 10 %, by weight based on the dry weight of the copolymer, copolymerized ethylenically unsaturated phosphate monomer, or salts thereof. Phosphate monomers are selected from phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, vinyl phosphates, and (meth)allyl phosphate. Preferred are phosphoalkyl methacrylates. It is also contemplated that the copolymerized ethylenically unsaturated phosphate monomer may be formed after the polymerization of at least one ethylenically unsaturated nonionic monomer and a phosphate precursor monomer by effecting the reaction of the copolymerized phosphate precursor monomer so as to convert it to a copolymerized phosphate monomer. For example, a polymer containing, as a polymerized unit, hydroxyethyl methacrylate which may then be reacted, as is well known in the art, to form, for example, phosphoethyl methacrylate.

The aqueous emulsion copolymer may contain from 0 to 5%, by weight based on the dry weight of the copolymer, copolymerized ethylenically unsaturated carboxylic acid monomer, based on the weight of the polymer, such as, for example, acrylic acid, methacrylic acid, crotonic acid, itaconic acid, fumaric acid, maleic acid, monomethyl itaconate, monomethyl fumarate, monobutyl fumarate, and maleic anhydride. Preferred is 0-2% copolymerized ethylenically unsaturated carboxylic acid monomer.

The aqueous emulsion copolymer may contain from 0% to 5%, by weight based on the dry weight of the copolymer, copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, and divinyl benzene. Preferred is the use of no copolymerized multi-ethylenically unsaturated monomers.

The glass transition temperature ("Tg") of the emulsion copolymer is from -15 °C to 20 °C, and preferably from -10 °C to 10 °C. Tgs used herein are those calculated by using the Fox equation (T.G. Fox, Bull. Am. Physics Soc., Volume 1, Issue No. 3, page 123(1956)). that is, for calculating the Tg of a copolymer of monomers M1 and M2,

$$1/\text{Tg(calc.)} = \text{w(M1)}/\text{Tg(M1)} + \text{w(M2)}/\text{Tg(M2)} \quad,$$

wherein

Tg(calc.) is the glass transition temperature calculated for the copolymer

w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,

all temperatures being in °K.

The glass transition temperatures of homopolymers may be found, for example, in "Polymer Handbook", edited by J. Brandrup and E.H. Immergut, Interscience Publishers.

The polymerization techniques used to prepare aqueous emulsion-copolymers are well known in the art. In the emulsion polymerization process conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer. Either thermal or redox initiation processes may be used. The reaction temperature is maintained at a temperature lower than 100 °C throughout the course of the reaction. Preferred is a reaction temperature between 10 °C and 95 °C, more preferably between 20 °C and 90 °C. The monomer mixture may be added neat or as an emulsion in water. The monomer mixture may be added in one or more additions or continuously, linearly or not, over the reaction period , or combinations thereof.

Conventional free radical initiators may be used such as, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01% to 3.0% by weight, based on the weight of total monomer. Redox systems using the same initiators coupled with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, lactic acid, glyceric acid, malic acid, tartaric acid and salts of the preceding acids may be used. Redox reaction catalyzing metal salts of iron, copper, manganese, silver, platinum, vanadium, nickel, chromium, palladium, or cobalt may be used. Chelating agents for the metals may optionally be used.

Chain transfer agents such as, for example, halogen compounds such as tetrabromomethane; allyl compounds; or mercaptans such as alkyl thioglycolates, alkyl mercaptoalkanoates, and $C_4$-$C_{22}$ linear or branched alkyl mercaptans may be used to lower the molecular weight of the emulsion polymer and/or to provide a different molecular weight distribution than would otherwise have been obtained with any free-radical-generating initiator(s). Chain transfer agent (s) may be added in one or more additions or continuously, linearly or not, over most or all of the entire reaction period or during limited portion(s) of the reaction period such as, for example, in the kettle charge and in the reduction of residual monomer stage. Chain transfer agent are typically used in the amount of 0 to 25 wt%, based on the total weight of monomer used to form the aqueous emulsion copolymer. A preferred level of chain transfer agent is from 0.01 to 0.5, more preferably from 0.02 to 0.4 and most preferably from 0.05 to 0.2 mole%, based on the total number of moles of monomer used to form the aqueous emulsion copolymer

In another embodiment of the present invention the aqueous emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer may contain the same monomers, surfactants, chain transfer agents, etc. as disclosed herein-above for the emulsion polymer. In the case of a multi-staged polymer particle the Tg for the purpose of this invention is to be calculated by the Fox equation as detailed herein using the overall composition of the emulsion polymer without regard for the number of stages or phases therein. Similarly, for a multi-staged polymer particle the amount of phosphate monomer shall be determined from the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373. A preferred multistage emulsion polymer contains phosphate monomer is only one of the stages.

The average particle diameter of the emulsion copolymer particles is from 50 to 350 nanometers, preferably from 100 to 300 nanometers, as measured by a BI-90 Particle Sizer. Without being bound by a particular theory, it is believed that lower particle sizes lead to greater emulsion polymer shear instability and that higher particle sizes lead to lower binding capacity and lower scrub resistance.

In one embodiment the aqueous coating composition is substantially free of water-soluble Phosphorous acid compounds such as may be achieved by purification of the phosphate monomer, of the aqueous emulsion polymer, of the aqueous coating composition, or of more than one of the foregoing; alternatively the aqueous emulsion polymer may be prepared by a process at a pH of less than 2 as is disclosed in US 20030236374.

The aqueous coating composition of this invention is contemplated to encompass coating or paint compositions which may be described in the art as low gloss or flat coatings, primers, textured coatings, and the like. The aqueous coating composition is prepared by techniques which are well known in the coatings art. First, optionally, at least one pigment is well dispersed in an aqueous medium under high shear such as is afforded by a COWLES mixer or, in an alternative, at least one predispersed pigment may be used. Then the aqueous emulsion copolymer is added under low shear stirring along with other coatings adjuvants, as desired. Alternatively, the aqueous emulsion copolymer may be included in the optional pigment dispersion step. The aqueous composition may contain conventional coatings adjuvants such as, for example, tackifiers, emulsifiers, coalescing agents such as for example, Texanol™ (Eastman Chemical Co.), cosolvents such as, for example, glycols and glycol ethers, buffers, neutralizers, thickeners or rheology modifiers, humectants, wetting agents, biocides, plasticizers, antifoaming agents, colorants, waxes, and anti-oxidants.

1. The aqueous coating composition, in addition to the aqueous emulsion copolymer described herein, may also contain one or more additional polymers, preferably additional emulsion polymers, not containing phosphate monomer as a copolymerized unit; such additional polymers may be present at a level of 0-200%, by weight based on the weight of the aqueous emulsion copolymer. In one such embodiment the aqueous coating composition includes, for example, from 40 to70 weight percent of the aqueous emulsion copolymer described hereinabove having an average particle diameter of from 150 to 250 nanometers and from 30 to 60 weight percent of a second emulsion copolymer having an average particle diameter of from 75 to 125 nanometers copolymer and including as polymerized units at least one ethylenically unsaturated nonionic monomer and from 0.1 to 10 %, by weight based on the dry weight of said copolymer, ethylenically unsaturated phosphate monomer, selected from phosphoalkyl(meth)acrylates, phosphoalkyl crotonates, phosphoalkyl maleates, phosphoalkyl fumarates, phosphodialkyl(meth)acrylates, phosphodialkyl crotonates, vinyl phosphates, and (meth)allyl phosphate, or salts thereof.

The solids content of the aqueous coating composition may be from about 10% to about 70% by volume. The viscosity of the aqueous composition may be from 0.05 to 10 Pa.s (50 cps to 10,000 cps), as measured using a Brookfield viscometer; the viscosities appropriate for different application methods vary considerably.

The aqueous composition may applied by conventional application methods such as, for example, brushing, roller application, and spraying methods such as, for example, air-atomized spray, air-assisted spray, airless spray, high volume low pressure spray, and air-assisted airless spray.

In the method of this invention the aqueous coating composition is applied to a substrate such as, for example, plastic, wood, metal, primed surfaces, previously painted surfaces, and cementitious substrates. The aqueous coating composition coated on the substrate is typically dried, or allowed to dry, at a temperature of from 1 °C to 95 °C.

The following examples are presented to illustrate the invention and the results obtained by the test procedures.

Abbreviations

BA = butyl acrylate
MMA = methyl methacrylate
MAA = methacrylic acid
PEM = phosphoethyl methacrylate (72 wt% active phosphate monomer)
DI water = deionized water
nDDM = n-dodecyl mercaptan
APS = ammonium persulfate
NaPS = sodium persulfate

Test Procedures

Wet-Scrub Resistance.

The abrasive scrub resistance of paints is determined using the ISO 11998:1998E test protocol (Paints and varnishes - Determination of wet-scrub resistance and cleanability of coatings). The test protocol measures the amount of paint film thickness in micrometers removed from the surface during a standard wet-scrub cycle. A lower value indicates better wet-scrub resistance. The relative wet-scrub resistance is determined by dividing the value obtained for the example paints (Comparative B.2, Example 2.A, Example 2.B, Example 2.C) by the value obtained for Comparative A. 2. If the value of the relative wet-scrub resistance is less than 90% (i.e. lower film loss) then the paint is rated a pass.

VOC Determinations

The Volatile Organic Content (VOC) herein is determined using the DIN 55649 test protocol. This test method measures the amount of VOC present in the sample and is reported as a percent of the total sample.

EXAMPLE 1: Preparation of aqueous emulsion copolymers

Comparative Example A1. A monomer emulsion is prepared by combining 969 g BA, 34 g MAA, 680 g MMA, 17 g ureido methacrylate, 477 g DI water, and 18.7 g of a 58% by wt aqueous solution of an ammonium alkylphenoxy polyethoxy sulfate surfactant, and emulsifying with stirring. Next, 2.5 g of a 58% by wt aqueous solution of an ammonium Alkylphenoxy polyethoxy sulfate surfactant and 1000 g DI water are charged to a five liter multi-neck flask fitted with mechanical stirring. The contents of the flask are heated to 85 °C under a nitrogen atmosphere. To the stirred flask contents is added 92 g of the monomer emulsion followed by 2.6 g APS in 100 g DI water and followed by 1.7g sodium carbonate in 100 g DI water. The total addition time for the monomer emulsion and a cofeed of 2.6 g APS in 100 g DI water is 210 minutes. Reactor temperature is maintained at 80 °C to 85 °C throughout the addition of the monomer mixture. Next, 60 g DI water is used to rinse the emulsion feed line to the reactor. The contents of the reactor are cooled to 65 °C. Next 6.6 ppm ferrous sulfate, 1 g t-butyl hydroperoxide (70% aq.), and 0.5 g D-isoascorbic acid in aqueous solutions were added to the flask. The contents of the flask are neutralized to a pH of 9.5 with ammonium hydroxide. The calculated Tg is -5°C.

Comparative Example B1. A reactor is charged with 234 g DI water, 38 g of a 5% by wt aqueous sodium pyrophosphate solution and 101 g of an acrylic latex (particle size 100 nm, solids content 45% by wt). This initial charge is heated to 85° C. under nitrogen. An aqueous initiator solution is prepared by combining 2.38 g NaPS with 70. g DI water. 7.24 g of the aqueous initiator solution is added to the reactor. A monomer emulsion is prepared by combining 196.27 g DI water, 21.11 g Dowfax™ 2A1 (supplied by Dow Chemical Company), 47.50 g Disponil™ FES 77 (supplied by Henkel), 410.40 g MMA, 502.55 g BA, 15.32 g of vinylphosphonic acid, 18.05g of ureido methacrylate. This monomer emulsion is added to the reactor over the course of 3 hours, and the remainder of the initiator solution over the course of 4 hours. After the end of the addition of initiator the temperature is maintained for 1 hour and then lowered to 60° C. Subsequently, 6.36 g of a 15% by wt aqueous solution of tert-butyl hydroperoxide and 7.25 g of an aqueous 13.1% by wt solution of isoascorbic acid are supplied to the reactor by way of separate feeds. The reactor is then maintained at 60°C for 1 hour. The batch is then cooled to room temperature and the pH adjusted to 9.1 using 10% by wt sodium hydroxide solution. The calculated Tg is 0°C.

Example 1A. A monomer emulsion is prepared by combining 969 g BA, 34 g PEM, 680 g MMA, 17 g ureido methacrylate, 477 g DI water, and 18.7 g of a 60% percent by wt aqueous solution of an ammonium Alkylphenoxy polyethoxy sulfate surfactant, and emulsifying with stirring. Next, 2.5 g of a 60% percent by wt aqueous solution of an ammonium Alkylphenoxy polyethoxy sulfate surfactant and 1000 g DI water are charged to a five liter multi-neck flask fitted with mechanical stirring. The contents of the flask are heated to 85 °C under a nitrogen atmosphere. To the stirred flask contents is added 92 g of the monomer emulsion followed by 2.6 g APS in 100 g DI water and followed by 1.7g sodium carbonate in 100 g DI water. The total addition time for the monomer emulsion and a cofeed of 2.6 g APS in 100 g DI water is 210 minutes. Reactor temperature is maintained at 80 °C to 85 °C throughout the addition of the monomer mixture. Next, 60 g DI water is used to rinse the emulsion feed line to the reactor. The contents of the reactor are cooled to 65 °C. Next 6.6 ppm of ferrous sulfate, 1 g t-butyl hydroperoxide, and 0.5 g D-isoascorbic acid in aqueous solutions are added to the flask. The contents of the flask are neutralized to a pH of 9.5 with ammonium hydroxide. The calculated Tg is -5°C.

Example 1B. A monomer emulsion is prepared by combining 600 g BA, 20 g PEM, 15 g ureido methacrylate, 365 g MMA, 1.25 g nDDM, 415 g DI water, 6.9 g sodium carbonate and 30.5 g of a 28% by weight aqueous solution of an alkyl sulfate surfactant and emulsifying with stirring. Next, 5.2 g of a 28% by wt aqueous solution of an alkyl sulfate surfactant and 380 g DI water are charged to a three liter multi-neck flask fitted with mechanical stirring. The flask contents are heated to 65 °C under a nitrogen atmosphere. To the stirred flask contents are added 35 g of the monomer emulsion followed by 0.02 g ferrous sulfate heptahydrate and 0.02 g tetrasodium salt of ethylenediamine-tetraacetic acid in 15.6 g DI water. Polymerization is initiated by the addition of 0.54 g APS in 8 g DI water followed by 0.27 g sodium hydrosulfite in 8 g DI water. Separate solutions of 2.9 g APS in 50 g DI water and 1 g of D-isoascorbic acid in 50 g DI water are fed concurrently with the monomer emulsion. Total addition time for the three feeds is 210 minutes. The contents of the flask are maintained at 65 °C throughout the addition of the monomer emulsion. The emulsion feed line is rinsed with 20 g DI water. After completion of the monomer emulsion addition, the reactor is cooled to 60 °C. Next, an aqueous solution containing 10 ppm ferrous sulfate, 1 g t-butyl hydroperoxide and 0.5 g D-isoascorbic acid is added. The contents of the flask are neutralized to a pH of 9.5 with ammonium hydroxide. The calculated Tg is -9°C.

Example 1C. A monomer emulsion is prepared by combining 600 g BA, 15 ureido methacrylate, 20 g PEM, 365 g MMA, 1.25 g nDDM, 415 g DI water, 6.9 g sodium carbonate and 30.5 g of a 28% by wt aqueous solution of an alkyl sulfate surfactant and emulsifying with stirring. Next, 5.2 g of a 28% by wt aqueous solution of an alkyl sulfate surfactant and 380 g DI water are charged to a three liter multi-neck flask fitted with mechanical stirring. The flask contents are heated to 65 °C under a nitrogen atmosphere. To the stirred flask contents are added 35 g of the monomer emulsion followed by 0.02 g ferrous sulfate heptahydrate and 0.02 g tetrasodium salt of ethylenediamine-tetraacetic acid in 15.6 g DI water. Polymerization is initiated by the addition of 0.54 g APS in 8 g DI water followed by 0.27 g sodium hydrosulfite in 8 g DI water. Separate solutions of 2.9 g APS in 50 g DI water and 1 g of D-isoascorbic acid in 50 g DI water are fed concurrently with the monomer emulsion. Total addition time for the three feeds is 210 minutes. The contents of the flask are maintained at 65 °C throughout the addition of the monomer emulsion. The emulsion feed line is rinsed with 20 g DI water. After completion of the monomer emulsion addition, the reactor is cooled to 60 °C. Next, aqueous solutions containing 35 % aq. hydrogen peroxide and D-isoascorbic acid dissolved in water, are added separately multiple times until residual monomers are reduced to less than 0.05 wt% and the total VOC is reduced to less than 0.1 wt% as measured by DIN-55649. The contents of the flask are then neutralized to a pH of 9.5. The calculated Tg is -9°C.

EXAMPLE 2. Preparation of aqueous coating compositions

A paint containing aqueous emulsion polymer Comparative A1 is prepared using the following procedure to form the aqueous coating composition Comparative A2. The ingredients listed in Table 2(part 1) are mixed using a high speed Cowles disperser. The ingredients listed in Table 2(part 2) are added using a conventional lab mixer. The PVC of the resulting paints is 82.7. The volume solids of the resulting paint is 40.6. The total VOC of each of the aqueous coating compositions is less than 0.02 wt% as measured by DIN-55649.

Table 2(part 1).

| Material | Weight (g) |
|---|---|
| Water | 112.69 |
| Natrosol™ 250HBR - (Hercules Inc.) | 1.49 |
| Tego Foamex™ 1495 - (Degussa Inc) | 3.11 |
| Tamol™ 1254 - (Rohm and Haas Co.) | 1.6 |
| Potassium Tripolyphosphate | 1.31 |
| Ti-Pure™ R-706 (Dupont) | 40.58 |
| SoCal™ 2 (Solvay Chemicals) | 56.17 |
| Opacamite™ (Imerys Minerals Ltd) | 12.25 |
| Mistron™ 353 (Luzenac America) | 51.56 |
| Atomite™(Imerys Minerals Ltd) | 146.89 |
| Water | 2.5 |
| Ropaque™ Ultra (Rohm and Haas Co) | 62.42 |

Table 2(part 2)

| Material | Weight (g) |
|---|---|
| Comparative A1 | 66.85 |
| Acrysol™ RM-8W (Rohm and Haas Co) | 1.59 |
| Acrysol™ ASE-60 (Rohm and Haas Co) | 0.65 |
| Water | 61.3 |
| Aqueous Ammonia (28%) | 0.3 |

Aqueous coating compositions Example 2A (incorporating emulsion polymer 1A), Example 2B (incorporating emulsion polymer 1B), Example 2C (incorporating emulsion polymer 1C), and Comparative B2 (incorporating emulsion polymer B1) are prepared following the procedure for preparation of Comparative A2. Appropriate adjustment of water and binder weights are done such that the resulting paints have a volume solids of 40.6 percent and a PVC of 82.7.

EXAMPLE 3. Evaluation of wet-scrub resistance

Following the procedure of ISO 11998:1998E the wet-scrub resistance is determined for Example 2A, Example 2B, Example 2C, Comparative A2 and Comparative B2. The results are given in Table 3.

Table 3

| Paint ID | Scrub result |
|---|---|
| Comparative A2 | Control |
| Comparative B2 | Fail |
| Example 2A | Pass |
| Example 2B | Pass |
| Example 2C | Pass |

**Claims**

1. An aqueous coating composition comprising at least one pigment, said coating composition having a pigment volume concentration (PVC) of from 75 to 90, and an aqueous emulsion copolymer, said copolymer having an average particle diameter of from 50 to 350 nanometers and a glass transition temperature (Tg) of from -15 °C to 20 °C, and said copolymer comprising as polymerized units at least one ethylenically unsaturated nonionic monomer and from 0.1 to 10 %, by weight based on the dry weight of said copolymer, ethylenically unsaturated phosphate monomer selected from phosphoalkyl(meth)acrylates, phosphoalkyl crotonates, phosphoalkyl maleates, phosphoalkyl fumarates, phosphodialkyl(meth)acrylates, phosphodialkyl crotonates, vinyl phosphates, and (meth)allyl phosphate, or salts thereof.

2. The aqueous coating composition of claim 1 wherein said copolymer comprises from 0.2 to 5 %, by weight based on the dry weight of said copolymer, ethylenically unsaturated phosphate monomer, or salts thereof.

3. The aqueous coating composition of claim 1 or claim 2 wherein the volatile organic content (VOC) is equal to or less than 2.0 wt%.

4. The aqueous coating composition of claim 1 or claim 2 wherein the volatile organic content (VOC) is equal to or less than 0.1 wt%.

5. A method for providing a coated substrate comprising

    (a) forming an aqueous coating composition comprising at least one pigment, said coating composition having a pigment volume concentration (PVC) of from 75 to 90, and an aqueous emulsion copolymer, said copolymer having an average particle diameter of from 50 to 350 nanometers and a Tg of from -15 °C to 20 °C, and said copolymer comprising as polymerized units at least one ethylenically unsaturated nonionic monomer and from 0.1 to 10 %, by weight based on the dry weight of said copolymer, ethylenically unsaturated phosphate monomer selected from phosphoalkyl(meth)acrylates, phosphoalkyl crotonates, phosphoalkyl maleates, phosphoalkyl fumarates, phosphodialkyl(meth)acrylates, phosphodialkyl crotonates, vinyl phosphates, and (meth)allyl phosphate, or salts thereof;
    (b) applying said aqueous composition to a substrate; and
    (c) drying, or allowing to dry, said aqueous composition.

6. The method of claim 5 wherein said copolymer comprises from 0.2 to 5 %, by weight based on the dry weight of said copolymer, ethylenically unsaturated phosphate monomer, or salts thereof.

**7.** The method of claim 5 or claim 6 wherein said aqueous coating composition has a VOC of equal to or less than 2.0 wt%.

**8.** The method of claim 5 or claim 6 wherein said aqueous coating composition has a VOC of equal to or less than 0.1 wt%.

**9.** A coated substrate prepared by the method of claim 5.

**Patentansprüche**

**1.** Wässrige Beschichtungszusammensetzung, umfassend mindestens ein Pigment, wobei die Beschichtungszusammensetzung eine Pigmentvolumenkonzentration (PVC) von 75 bis 90 aufweist, und ein wäßriges Emulsionscopolymer, wobei das Copolymer einen mittleren Teilchendurchmesser von 50 bis 350 nm und eine Glasübergangstemperatur (Tg) von -15°C bis 20°C aufweist, und das Copolymer als polymerisierte Einheiten mindestens ein ethylenisch ungesättigtes, nicht-ionisches Monomer und von 0,1 bis 10 Gew.-%, bezogen auf das Trockengewicht des Copolymers, ethylenisch ungesättigtes Phosphatmonomer, ausgewählt aus Phosphoalkyl(meth)acrylaten, Phosphoalkylcrotonaten, Phosphoalkylmaleaten, Phosphoalkylfumaraten, Phosphodialkyl(meth)acrylaten, Phosphodialkylcrotonaten, Vinylphosphaten und Meth(allyl)phosphaten, oder Salze davon umfasst.

**2.** Wässrige Beschichtungszusammensetzung nach Anspruch 1, wobei das Copolymer von 0,2 bis 5 Gew.-%, bezogen auf das Trockengewicht des Copolymers, ethylenisch ungesättigtes Phosphatmonomer oder Salze davon umfasst.

**3.** Wässrige Beschichtungszusammensetzung nach Anspruch 1 oder Anspruch 2, wobei der Gehalt an flüchtigen organischen Verbindungen (VOC) gleich oder weniger als 2,0 Gew.-% ist.

**4.** Wässrige Beschichtungszusammensetzung nach Anspruch 1 oder Anspruch 2, wobei der Gehalt an flüchtigen organischen Verbindungen (VOC) gleich oder weniger als 0,1 Gew.-% ist.

**5.** Verfahren zum Bereitstellen eines beschichteten Substrates, umfassend

(a) das Bilden einer wässrigen Beschichtungszusammensetzung, umfassend mindestens ein Pigment, wobei die Beschichtungszusammensetzung eine Pigmentvolumenkonzentration (PVC) von 75 bis 90 aufweist, und ein wässriges Emulsionscopolymer, wobei das Copolymer einen mittleren Teilchendurchmesser von 50 bis 350 nm und eine Tg von -15°C bis 20°C aufweist, und das Copolymer als polymerisierte Einheiten mindestens ein ethylenisch ungesättigtes, nicht-ionisches Monomer und von 0,1 bis 10 Gew.-%, bezogen auf das Trockengewicht des Copolymers, ethylenisch ungesättigtes Phosphatmonomer, ausgewählt aus Phosphoalkyl(meth)acrylaten, Phosphoalkylcrotonaten, Phosphoalkylmaleaten, Phosphoalkylfumaraten, Phosphodialkyl(meth)acrylaten, Phosphodialkylcrotonaten, Vinylphosphaten und Meth(allyl)phosphaten, oder Salze davon umfasst,
(b) das Aufbringen der wässrigen Zusammensetzung auf ein Substrat, und
(c) das Trocknen der wässrigen Zusammensetzung oder das Erlauben der wäßrigen Zusammensetzung zu trocknen.

**6.** Verfahren nach Anspruch 5, wobei das Copolymer 0,2 bis 5 Gew.-%, bezogen auf das Trockengewicht des Copolymers, ethylenisch ungesättigtes Phosphatmonomer oder Salze davon umfasst.

**7.** Verfahren nach Anspruch 5 oder Anspruch 6, wobei die wässrige Beschichtungszusammensetzung einen VOC gleich oder weniger als 2,0 Gew.-% aufweist.

**8.** Verfahren nach Anspruch 5 oder Anspruch 6, wobei die wässrige Beschichtungszusammensetzung einen VOC gleich oder weniger als 0,1 Gew.-% aufweist.

**9.** Beschichtetes Substrat, hergestellt durch das Verfahren nach Anspruch 5.

**Revendications**

**1.** Composition aqueuse de revêtement comprenant au moins un pigment, ladite composition de revêtement ayant une concentration de pigment en volume (PVC) de 75 à 90, et un copolymère en émulsion aqueuse, ledit copolymère ayant un diamètre moyen de particules de 50 à 350 nanomètres et une température de transition vitreuse (Tg) de -15°C à 20°C, et ledit copolymère comprenant comme unités polymérisées au moins un monomère non ionique à insaturation éthylénique et de 0,1 à 10 % en masse, par rapport à la masse sèche dudit copolymère, d'un monomère dérivé de phosphate à insaturation éthylénique choisi parmi des (méth)acrylates de phosphoalkyle, des crotonates de phosphoalkyle, des maléates de phosphoalkyle, des fumarates de phosphoalkyle, des (méth)acrylates de phosphodialkyle, des crotonates de phosphodialkyle, des phosphates de vinyle, et le phosphate de (méth)allyle, ou des sels de ceux-ci.

**2.** Composition aqueuse de revêtement selon la revendication 1, dans laquelle ledit copolymère comprend de 0,2 à 5 % en masse, par rapport à la masse sèche dudit copolymère, d'un monomère dérivé de phosphate à insaturation éthylénique, ou de sels de celui-ci.

**3.** Composition aqueuse de revêtement selon la revendication 1 ou la revendication 2, dans laquelle les composés organiques volatils (COV) représentent un taux égal ou inférieur à 2,0 % en masse.

**4.** Composition aqueuse de revêtement selon la revendication 1 ou la revendication 2, dans laquelle les composés organiques volatils (COV) représentent un taux égal ou inférieur à 0,1 % en masse.

**5.** Procédé pour la fourniture d'un substrat revêtu comprenant

(a) la formation d'une composition aqueuse de revêtement comprenant au moins un pigment, ladite composition de revêtement ayant une concentration de pigment en volume (PVC) de 75 à 90, et un copolymère en émulsion aqueuse, ledit copolymère ayant un diamètre moyen de particules de 50 à 350 nanomètres et une Tg de -15°C à 20°C, et ledit copolymère comprenant comme unités polymérisées au moins un monomère non ionique à insaturation éthylénique et de 0,1 à 10 % en masse, par rapport à la masse sèche dudit copolymère, d'un monomère dérivé de phosphate à insaturation éthylénique choisi parmi des (méth)acrylates de phosphoalkyle, des crotonates de phosphoalkyle, des maléates de phosphoalkyle, des fumarates de phosphoalkyle, des (méth) acrylates de phosphodialkyle, des crotonates de phosphodialkyle, des phosphates de vinyle, et le phosphate de (méth)allyle, ou des sels de ceux-ci ;
(b) l'application de ladite composition aqueuse sur un substrat ; et
(c) le séchage de ladite composition aqueuse ou l'action de laisser sécher celle-ci.

**6.** Procédé selon la revendication 5, dans lequel ledit copolymère comprend de 0,2 à 5 % en masse, par rapport à la masse sèche dudit copolymère, d'un monomère dérivé de phosphate à insaturation éthylénique, ou de sels de celui-ci.

**7.** Procédé selon la revendication 5 ou la revendication 6, dans lequel ladite composition aqueuse de revêtement a un COV égal ou inférieur à 2,0 % en masse.

**8.** Procédé selon la revendication 5 ou la revendication 6, dans lequel ladite composition aqueuse de revêtement a un COV égal ou inférieur à 0,1 % en masse.

**9.** Substrat revêtu préparé par la méthode selon la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6492451 B
- DE 10236395
- WO 0047633 A
- EP 0601400 A
- WO 9312183 A
- WO 9312184 A
- WO 9311181 A
- US 5055511 A
- US 4325856 A
- US 4654397 A
- US 4814373 A
- US 20030236374 A

**Non-patent literature cited in the description**

- **T.G. Fox.** *Bull. Am. Physics Soc.,* 1956, vol. 1 (3), 123